# EUROPÄISCHE PATENTANMELDUNG

(11) **EP 4 614 737 A1**
(43) Veröffentlichungstag der Anmeldung: **10.09.2025**
(21) Anmeldenummer: 25155610.6
(22) Anmeldetag: 03.02.2025
(51) Int. Cl.: H01R 13/46, H01R 13/641, H01R 13/717, H02G 3/14, H01H 9/02, H01R 13/631, H01R 24/28

(54) **BAUTEIL EINER ELEKTRISCHEN STECKVERBINDUNG UND/ODER ABDECKUNG FÜR EINE STECKDOSE, EINEN TASTER, EINEN SCHALTER ODER EIN ELEKTROTECHNISCHES ODER ELEKTRONISCHES BAUELEMENT SOWIE BAUKASTENSYSTEM UMFASSEND MEHRERE TYPEN VON ABDECKUNGEN**

(30) Priorität: 07.02.2024 DE 202024100588 U
(71) Anmelder: C.M.C. GmbH Holding, 66386 St. Ingbert (DE)
(72) Erfinder: Uhle, Marc, 66386 St. Ingbert (DE)
(74) Vertreter: Patentanwaltskanzlei Vièl & Wieske PartGmbB

(57) **Zusammenfassung**

Die vorliegende Erfindung betrifft ein Bauteil einer elektrischen Steckverbindung mit einem Einsteckschacht, wobei sich im Inneren des Einsteckschachtes ein Kunststoffelement befindet.

Um die Orientierung des Benutzers beim Betätigen von Bedienelementen oder zur Kontaktierung auch bei ungünstigen Lichtverhältnissen zu verbessern, wird im Rahmen der Erfindung vorgeschlagen, dass zumindest Flächenteile des Kunststoffelementes, die in dem Einsteckschacht vor dem Kontaktieren der Steckverbindung sichtbar sind, aus einem Material mit fluoreszierenden oder phosphoreszierenden Eigenschaften bestehen.

## Beschreibung

Die vorliegende Erfindung betrifft ein Bauteil einer elektrischen Steckverbindung nach dem Oberbegriff des Anspruchs 1, alternativ oder zusätzlich ein Bauteil einer elektrischen Steckverbindung nach dem Oberbegriff des Anspruchs 2, alternativ oder zusätzlich eine Abdeckung für eine Steckdose, einen Taster, einen Schalter oder ein elektrotechnisches oder elektronisches Bauelement nach dem Oberbegriff des Anspruchs 3 sowie weiterhin alternativ oder zusätzlich ein Baukastensystem umfassend mehrere Typen von Abdeckungen nach dem Oberbegriff des Anspruchs 8.

Die elektrische Steckverbindung, um die es im Zusammenhang mit dem vorliegenden Schutzrecht bei Anspruch 1 geht, kann beispielsweise eine Steckverbindung zur Kontaktierung eines USB-Anschlusses sein. Diese USB-Anschlüsse weisen einen Einsteckschacht auf, in dessen Innerem sich ein Kunststoffelement befindet. Dieses Kunststoffelement ist der Träger von elektrischen Kontaktelementen, die beim Kontaktieren der elektrischen Steckverbindung mit Kontaktelementen eines anderen Bauteils der elektrischen Steckverbindung zusammenwirken.

Die elektrische Steckverbindung, um die es im Zusammenhang mit dem vorliegenden Schutzrecht bei Anspruch 2 geht, kann beispielsweise eine Steckverbindung zur Kontaktierung eines Netzsteckers in einer Steckdose oder einer Aufnahme eines solchen Steckers in einer Mehrfachsteckdose oder einem Verlängerungskabel sein. Es geht bei dem Bauteil des Anspruchs 2 um den Stecker, der mehrere Pins aufweist. Diese Pins bestehen an der Oberfläche teilweise aus Metall und teilweise aus Kunststoff. In diesen Bereichen der Pins und/oder im Griffbereich eines solchen Steckers kann das Material zumindest teilweise fluoreszierende und/oder phosphoreszierende Eigenschaften aufweisen.

Wenn das Material in den Teilbereichen der Pins fluoreszierende und/oder phosphoreszierende Eigenschaften aufweist, können diese Pins vom Benutzer auch bei schwierigen Lichtverhältnissen gut erkann und gezielt in die Öffnungen einer Steckdose für diese Pins geführt werden.

Wenn das Material im Griffbereich des Steckers fluoreszierende oder phosphorszierende Eigenschaften aufweist, kann der Stecker damit auch bei schwierigen Lichtverhältnissen insbesondere dann gut in einer Steckdose eingeführt werden, wenn die Umgebung einer Ausnehmung für den Stecker in der Steckdose ebenfalls aus einem Material mit fluoreszierenden und/oder phosphoreszierenden Eigenschaften besteht. In jedem Fall ist das Nachleuchten des Griffbereichs des Steckers bereits für sich vorteilhaft.

In der Elektroinstallation ist es bekannt, Steckdosen, Schalter oder Taster vorzusehen, die beispielsweise als Unterputz-Einsatzelemente ausgestaltet sein können zum Einbau in Unterputzdosen oder zum Einbau in Installationsdosen für die Hohlwandinstallation.

Es ist auch bekannt, derartige Steckdosen, Schalter oder Taster zur Auf-Putz-Montage vorzusehen. Diese Elemente (Steckdosen, Schalter, Taster) werden dabei in ein passendes Gehäuse montiert, das an der Wand angebracht wird. Dieses Gehäuse weist Seitenwände auf sowie eine Vorderseite, in die die Elemente eingesetzt werden.

Diese Elemente der Elektroinstallation (Steckdosen, Schalter, Taster) weisen neben den elektrotechnischen Bauteilen Abdeckungen auf, die nach dem Kontaktieren und Montieren der elektrotechnischen Bauteile auf diese elektrotechnischen Bauteile montiert werden. Zu diesen Abdeckungen gehören auch Rahmen. Diese Rahmen betreffen Anordnungen von mehreren Elementen in einer Reihe unmittelbar nebeneinander.

Es ist auch bekannt, elektrotechnisches oder elektronische Bauelemente vergleichbar den Steckdosen, Schaltern oder Tastern zu montieren. Die elektrotechnischen oder elektronischen Bauelemente können Regel- oder Steuerelemente sein oder Bedienelemente für Regel- oder Steuersysteme. Diese elektrotechnischen oder elektronischen Bauelemente können beispielsweise Steuerungen oder Regelungen für Rollläden oder Jalousien sein oder für andere elektrische Systeme. Die elektrotechnischen oder elektronischen Bauelemente weisen Bedienelemente auf, über die ein Benutzer Einstellungen vornehmen kann. Die Bedienelemente können Schalter, Taster oder beispielsweise auch Schieberegler sein. Diese Bedienelemente sind in Gehäuse integriert, die - vergleichbar den Abdeckungen für Steckdosen, Schalter oder Taster - eine Oberfläche aufweisen, die geschlossen ist bis auf die genannten Bedienelemente. Diese Oberfläche, in die die Bedienelemente der elektrotechnischen oder elektronischen Bauelemente eingebettet sind, ist im Zusammenhang mit diesem Schutzrechte ebenfalls eine Abdeckung, auch wenn diese Oberfläche mit den elektrotechnischen oder elektronischen Bestandteilen des Bauelementes baulich vereinigt ist.

Der vorliegenden Erfindung liegt die Aufgabe zugrunde, die Orientierung des Benutzers beim Betätigen von Bedienelementen oder zur Kontaktierung auch bei ungünstigen Lichtverhältnissen zu verbessern.

Diese Aufgabe wird nach der vorliegenden Erfindung gemäß Anspruch 1 gelöst durch ein Bauteil einer elektrischen Steckverbindung mit einem Einsteckschacht. Wie eingangs beschrieben kann es sich dabei um einen USB-Anschluss handeln. Im Inneren des Einsteckschachtes befindet sich ein Kunststoffelement. Nach der vorliegenden Erfindung bestehen zumindest Flächenteile des Kunststoffelementes, die in dem Einsteckschacht vor dem Kontaktieren der Steckverbindung sichtbar sind, aus einem Material mit fluoreszierenden oder phosphoreszierenden Eigenschaften. Wenn es sich um einen USB-Anschluss handelt, erweist es sich als vorteilhaft, insbesondere die Stirnseite des USB-Anschlusses zumindest teilweise aus einem Material mit fluoreszierenden oder phosphoreszierenden Eigenschaftten zu gestalten. Dazu können dem Kunststoff zumindest in dem Bereich des Kunststoffelementes, das dessen Stirnseite betrifft, die bei nicht angeschlossener Steckverbindung sichtbar ist, Additive mit fluoreszierenden oder phosphoreszierenden Eigenschaften zugemischt werden.

Dadurch wird die Sichtbarkeit und die Erkennbarkeit des USB-Anschlusses auch bei ungünstigen Lichtverhältnissen verbessert. Es kann sich dabei um USB-Anschlüsse an anderen elektrischen Geräten handeln (beispielsweise Computern oder Smartphones) oder auch um USB-Anschlüsse, die als Anschlussmöglichkeit in die Abdeckung von Steckdosen integriert sind, um beispielsweise Ladekabel für Geräte anzuschließen, deren Akkumulator über einen USB-Anschluss aufgeladen werden kann.

Diese Aufgabe wird nach der vorliegenden Erfindung weiterhin gemäß Anspruch 2 gelöst durch ein Bauteil einer elektrischen Steckverbindung mit einem oder mehreren Pins. Wie eingangs erläutert kann es sich dabei um einen Stecker handeln, mit dem ein mit Netzspannung betriebenes elektrisches Gerät mit Strom versorgt wird. Die Pins weisen insofern ein Kunststoffelement auf, als die Pins an der Oberfläche teilweise aus Kunststoff bestehen. Nach der vorliegenden Erfindung bestehen zumindest Flächenteile des Kunststoffelementes aus einem Material mit fluoreszierenden oder phosphoreszierenden Eigenschaften.

Diese Aufgabe wird nach der vorliegenden Erfindung weiterhin gemäß Anspruch 3 gelöst durch eine Abdeckung für eine Steckdose, einen Taster, einen Schalter oder ein elektrotechnisches oder elektronisches Bauelement. Dazu besteht die Abdeckung zumindest teilweise aus einem Material mit fluoreszierenden oder phosphoreszierenden Eigenschaften.

Dadurch wird die Orientierung gerade bei schwierigen Lichtverhältnissen verbessert, um die Steckdose zum Einstecken eines Steckers oder den Schalter oder den Taster zur Betätigung besser finden zu können. Dies gilt ebenso für ein Bedienelement eines elektrotechnischen oder elektronischen Bauelements.

Bei der Ausgestaltung gemäß Anspruch 4 besteht das Kunststoffelement des Bauteils der elektrischen Steckverbindung und/oder die Abdeckung zumindest teilweise aus einem Materialgemisch. Dieses Materialgemisch weist als einen ersten Bestandteil Kunststoff auf und als einen weiteren Bestandteil ein Material mit fluoreszierenden oder phosphoreszierenden Eigenschaften.

Dabei kann der Kunststoff, aus dem das Kunststoffelement in dem Einsteckschacht des Bauteils der elektrischen Steckverbindung besteht, und/oder aus dem die Abdeckung besteht, vollständig aus dem Materialgemisch bestehen.

Es ist auch möglich, dass das Kunststoffelement des Bauteils der elektrischen Steckverbindung und/oder die Abdeckung unterschiedliche Bereiche aufweisen, wobei ein oder mehrere Bereiche des Kunststoffelements des Bauteils der elektrischen Steckverbindung und/oder der Abdeckung aus herkömmlichem Kunststoff bestehen, wobei ein oder mehrere andere Teile des Kunststoffelements des Bauteils der elektrischen Steckverbindung und/oder der Abdeckung zumindest teilweise aus dem Material mit den fluoreszierenden oder phosphoreszierenden Eigenschaften besteht.

Besonders mit der Ausgestaltung gemäß dem vorhergehenden Absatz lässt sich erreichen, dass die Form der Gestaltung der Oberfläche mit dem fluoreszierenden oder phosphoreszierenden Material für den Benutzer sinnvoll und gut erkennbar gestaltet werden kann.

Anspruch 5 betrifft eine Ausgestaltung einer Abdeckung in Rückbeziehung auf einen der Ansprüche 3 oder 4. Diese Abdeckung besteht
> in ersten Bereichen der Abdeckung in der Oberfläche und in der Tiefe durchgehend aus Kunststoff und
> in übrigen Bereichen der Oberfläche zumindest teilweise aus einem Material mit fluoreszierenden oder phosphoreszierenden Eigenschaften.

In den ersten Bereich im Sinne des Anspruchs 5 hat der Kunststoff keine Additive, die fluoreszierende und/oder phosphoreszierende Eigenschaften aufweisen.

Das Material in den übrigen Bereichen der Oberfläche kann ein Kunststoff sein, der Additive aufweist, die fluoreszierende oder phoreszierende Eigenschaften aufweisen.

Vorteilhaft hat der Kunststoff in den ersten Bereichen der Abdeckung die Eigenschaft, dass dieser Kunststoff bei höheren Temperaturen aushärtet als das Material in den übrigen Bereichen. Das ermöglicht eine Herstellung der Abdeckung, bei der in einem ersten Schritt die Abdeckung in einem Spritzgießverfahren hinsichtlich der ersten Bereiche hergestellt wird. Nach dem Aushärten dieser teilgefertigten Abdeckung kann das Material der übrigen Bereiche in diese teilgefertigte Abdeckung eingespritzt werden. Vorteilhaft erfolgt dies bei einer Termperatur, die niedriger ist als die Termperatur, bei der Kunststoff der ersten Bereiche aushärtet.

Damit lässt sich eine solche Abdeckung einfach herstellen.

Anspruch 6 betrifft eine Abdeckung für eine Steckdose in der Rückbeziehung auf den Anspruch 5. Die übrigen Bereiche der Oberfläche der Abdeckung sind
> ein Bereich um die runde Ausnehmung in der Abdeckung der Steckdose zur Aufnahme eines runden Steckers
   und/oder
> ein Bereich um die beiden Öffnungen in der Abdeckung der Steckdose zum Durchstecken der Kontakte eines Steckers, um diese in der Steckdose zu kontaktieren,
   und/oder
> der Randbereich der Abdeckung der Steckdose.

Damit lässt sich eine Steckdose einfach finden. Dies betrifft insbesondere auch die Orientierung (Ausrichtung) eines Steckers, in der dieser Stecker in die Steckdose eingesteckt werden kann.

Anspruch 7 betrifft eine Abdeckung für einen Schalter, Taster oder ein elektrotechnisches oder elektronisches Bauelement. Die übrigen Bereiche der Oberfläche der Abdeckung gemäß Anspruch 7 sind
> die Umgebung der äußeren Begrenzung der Bedienfläche des Schalters, des Tasters oder des elektrotechnischen oder elektronischen Bauelements in der Abdeckung
   und/oder
> der Randbereich der Abdeckung des Schalters, des Tasters oder des elektrotechnischen oder elektronischen Bauelements
   und/oder
> die Mitte der Abdeckung des Schalters, des Tasters oder des elektrotechnischen oder elektronischen Bauelements.

Damit lassen sich die Flächen, auf denen die eigentlichen Bedienelemente des Schalters, des Tasters oder des elektrotechnischen oder elektronischen Bauelements angeordnet sind, einfach finden.

Es ist beispielsweise auch möglich, die beiden Wippen eines Doppeltasteers (beispielsweise für die "Aufwärts-" und die "Abwärts-"Schaltung so zu gestalten, dass das Material mit den fluoreszierenden oder phosphoreszierenden Eigenschaften in Form eines entsprechenden Pfeils angeordnet ist.

Bei einem Schalter kann in der Mitte des Bedienelementes das fluoreszierende oder phosphoreszierende Material in der Form des Symbols für einen Schalter angeordnet sein.

Anspruch 8 betrifft ein Baukastensystem, das mehrere Typen von Abdeckungen nach einem der Ansprüche 5 bis 7 umfasst. Das Baukastensystem umfasst einen ersten Typ von Abdeckungen für Steckdosen. Das Baukastensystem umfasst zumindest einen zweiten Typ von Abdeckungen für Schalter und/oder Taster. Insoweit handelt es sich um eine übliche Ausführungsform von sogenannten "Schalterprogrammen", die von verschiedenen Herstellern der Elektroinstallation angeboten werden. Nach der vorliegenden Erfindung ist die Anordnung der übrigen Bereiche der Oberfläche der Abdeckungen in dem Baukastensystem unterschiedlich
> für den ersten Typ von Abdeckungen
> zu dem zumindest einen zweiten Typ von Abdeckungen.

Damit lässt sich vorteilhaft für den Benutzer auch bei schwierigen Lichtverhältnissen ein Schalter oder Taster einfach von einer Steckdose unterscheiden. Dies ist insofern sinnvoll, weil Schalter, Taster und Steckdosen mit einem gemeinsamen Rahmen in einer Reihe angeordnet sein können. Es ist vorteilhaft, wenn der Benutzer erkennen kann, an welcher Stelle sich ein Schalter oder Taster befindet.

Ein Ausführungsbeispiel der Erfindung ist in der Zeichnung dargestellt. Es zeigt dabei:
- Fig. 1:: ein erstes Bauteil einer elektrischen Steckverbindung als USB-Stecker,
- Fig. 2:: ein zweites Bauteil einer elektrischen Steckverbindung als USB-Stecker,
- Fig. 3:: ein Beispiel für eine Abdeckung für eine Steckdose in einem Schalterprogramm der Elektroinstallation,
- Fig. 4:: ein Beispiel für eine Abdeckung für einen Schalter in einem Schalterprogramm der Elektroinstallation,
- Fig. 5:: ein Beispiel für eine Abdeckung für einen Taster in einem Schalterprogramm der Elektroinstallation,
- Fig. 6:: ein Beispiel für eine Abdeckung für einen Doppeltaster in einem Schalterprogramm der Elektroinstallation und
- Fig. 7:: ein Beispiel für ein Bauteil einer elektrischen Steckverbindung, das ein Stecker ist.

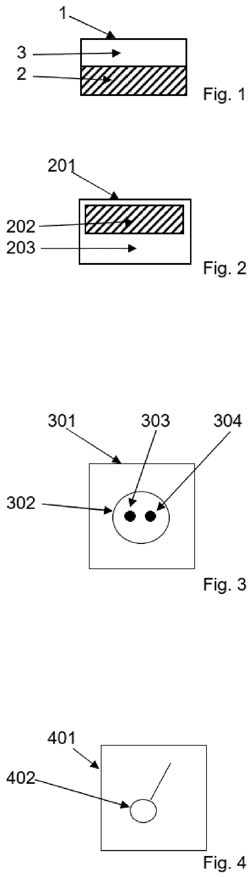

Figur 1 zeigt ein erstes Bauteil einer elektrischen Steckverbindung als USB-Stecker. Es handelt sich hierbei um einen USB-Stecker, der üblicherweise am Ende eines Kabels angebracht ist, das fester Bestandteil eines Gerätes ist, das über einen USB-Anschluss kontaktiert werden soll. Dieser USB-Stecker weist eine äußere Hülle 1 auf, die quaderförmig ist und aus Metall besteht. Im Inneren ist - bei diesem ersten Bauteil unmittelbar an der Innenseite der Fläche der quaderförmigen Hülle - ein Kunststofftelement 2 angebracht.

Figur 1 zeigt diesen USB-Stecker in einer Draufsicht. Der Raum, der sich in der Darstellung der Figur 1 oberhalb des Kunststoffelements 2 befindet (bis zur oberen Wand der quaderförmigen Hülle 1), ist ein Leerraum 3. Auf der Oberseite des Kunststoffelements 2 sind in dem Leerraum 3 streifenförmige Kontakte angebracht.

Figur 2 zeigt ein zweites Bauteil einer elektrischen Steckverbindung als USB-Stecker. Es handelt sich hierbei um einen USB-Stecker, der üblicherweise direkt in das Gehäuse eines Gerätes integriert ist, an dem mittels eines USB-Kabels ein anderes Gerät angeschlossen werden soll.

Dieses Gerät kann beispielsweise ein Spannungswandler sein, in dem die Netzspannung - soweit vom Stromnetz her notwendig - gleichgerichtet und transformiert wird auf das Spannungsniveau der USB-Stecker.

Bei dem Gerät kann es sich auch um ein anderes Gerät handeln, so dass über die USB-Steckverbindung nicht nur die beiden spannungsführenden Kontakte des USB-Anschlusses kontaktiert werden, sondern auch einer oder mehrere der weiteren Kontakte, die für einen Austausch von Daten vorgesehen sind.

Dieser USB-Stecker weist eine äußere Hülle 201 auf, die ebenfalls quaderförmig ist und aus Metall besteht. Die lichte Weite der quaderförmigen Hülle 201 dieses zweiten Bauteils ist so bemessen, dass sich das erste Bauteil der USB-Steckverbindung gemäß Figur 1 mit seiner äußeren Hülle 1 in diese äußere Hülle 201 einschieben lässt.

Im Inneren ist - bei diesem zweiten Bauteil mit einem Abstand zur Innenseite der Fläche der quaderförmigen Hülle 201 - ein Kunststofftelement 202 angebracht. Dieser Abstand ist so bemessen, dass er zur Oberseite der quaderförmigen Hülle 201 sowie zu den beiden Seitenteilen der quaderförmigen Hülle 201 mit der Materialstärke der äußeren Hülle 1 des ersten Bauteils korreliert, so dass sich das erste Bauteil in das zweite Bauteil einschieben lässt.

Figur 2 zeigt diesen USB-Stecker in einer Draufsicht. Der Raum, der sich in der Darstellung der Figur 2 unterhalb des Kunststoffelements 202 befindet (bis zur unteren Wand der quaderförmigen Hülle 201), ist ein Leerraum 203. Auf der Unterseite des Kunststoffelements 202 sind in dem Leerraum 203 streifenförmige Kontakte angebracht.

Beim Einschieben des ersten Bauteils gemäß der Figur 1 in das zweite Bauteil gemäß der Figur 2 werden die elektrischen Kontakte miteinander kontaktiert, die auf den Kunststoffelementen 2 und 202 angebracht sind. Der Leerraum 3 ist so bemessen, dass sich beim Einschieben des ersten Bauteils in das zweite Bauteil das Kunststoffelement 202 in diesen Leerraum 3 einschieben lässt. Ebenso ist der Leerraum 203 so bemessen, dass sich der entsprechend Teile der quaderförmigen Hülle 1 mit dem Kunststoffelement 2 des ersten Bauteils in diesen Leerraum 203 einschieben lässt.

Die Sichtbarkeit des USB-Anschlusses wird verbessert, wenn zumindest die in den Figuren 1 und 2 sichtbaren Stirnseiten wenigstens eines der Kunststoffelemente 2 und / oder 202 zumindest teilweise aus einem Material bestehen, das fluoreszierende oder phosphoreszierende Eigenschaften aufweist.

Figur 3 zeigt ein Beispiel für eine Abdeckung für eine Steckdose in einem Schalterprogramm der Elektroinstallation.

Die Abdeckung weist einen äußeren Rand 301 auf. Außerdem ist eine kreisförmige Ausnehmung 302 zu sehen, in die ein zylindrischer Stecker (Schuko-Stecker) eingesteckt werden kann. In der kreisförmigen Ausnehmung 302 befinden sich nochmals zwei Öffnungen 303 und 304, durch die beim Einstecken eines Steckers in die Abdeckung die Pins durchgesteckt werden zur Kontaktierung in der Steckdose.

Das Material dieser Abdeckung kann so beschaffen sein, dass zumindest die Oberseite der Abdeckung vollständig fluoreszierende oder phosphoreszierende Eigenschaften aufweist.

Es ist auch möglich, dass diese Abdeckung erste Bereiche aufweist, in denen die Abdeckung von der Oberseite bis zur Unterseite aus dem üblichen Kunststoff besteht. Diese Abdeckung weist weitere Bereiche auf, in denen die Abdeckung zumindest auf der Oberseite fluoreszierende oder phosphoreszierende Eigenschaften aufweist. Diese weiteren Bereiche können sein:
> Der Randbereich 301 der Abdeckung,
> Der Bereich um die Öffnungen 303 und 304 in der Ausnehmung 302 und/oder
> Der Bereich um die kreisförmige Ausnehmung 302.

Figur 4 zeigt ein Beispiel für eine Abdeckung für einen Schalter in einem Schalterprogramm der Elektroinstallation.

Es handelt sich bei dieser Abdeckung um eine Wippe für einen Schalter. Diese Abdeckung weist einen äußeren Rand 401 auf. Es ist zu sehen, dass auf der Abdeckung ein Symbol angebracht ist, das einen Schalter repräsentiert.

Das Material dieser Abdeckung kann so beschaffen sein, dass zumindest die Oberseite der Abdeckung vollständig fluoreszierende oder phosphoreszierende Eigenschaften aufweist.

Es ist auch möglich, dass diese Abdeckung erste Bereiche aufweist, in denen die Abdeckung von der Oberseite bis zur Unterseite aus dem üblichen Kunststoff besteht. Diese Abdeckung weist weitere Bereiche auf, in denen die Abdeckung zumindest auf der Oberseite fluoreszierende oder phosphoreszierende Eigenschaften aufweist. Diese weiteren Bereiche können sein:
> Der Randbereich 401 der Abdeckung,
> Die Mitte der Abdeckung, wobei dieser weitere Bereich besonders vorteilhaft die Struktur eines Symbols 402 für einen Schalter aufweist.

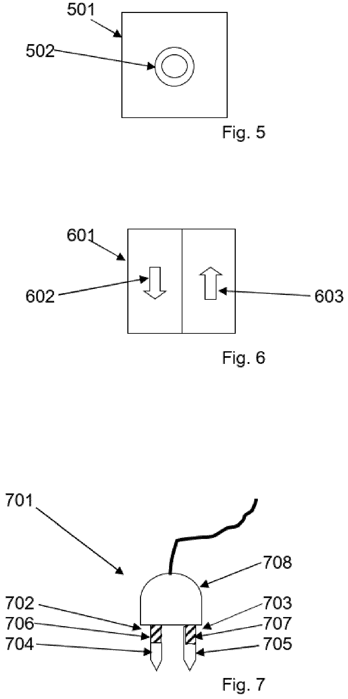

Figur 5 zeigt ein Beispiel für eine Abdeckung für einen Taster in einem Schalterprogramm der Elektroinstallation.

Es handelt sich bei dieser Abdeckung um eine Wippe für einen Taster. Diese Abdeckung weist einen äußeren Rand 501 auf. Es ist zu sehen, dass auf der Abdeckung ein Symbol angebracht ist, das einen Taster repräsentiert.

Das Material dieser Abdeckung kann so beschaffen sein, dass zumindest die Oberseite der Abdeckung vollständig fluoreszierende oder phosphoreszierende Eigenschaften aufweist.

Es ist auch möglich, dass diese Abdeckung erste Bereiche aufweist, in denen die Abdeckung von der Oberseite bis zur Unterseite aus dem üblichen Kunststoff besteht. Diese Abdeckung weist weitere Bereiche auf, in denen die Abdeckung zumindest auf der Oberseite fluoreszierende oder phosphoreszierende Eigenschaften aufweist. Diese weiteren Bereiche können sein:
> Der Randbereich 501 der Abdeckung,
> Die Mitte der Abdeckung, wobei dieser weitere Bereich besonders vorteilhaft die Struktur eines Symbols 502 für einen Taster aufweist.

Figur 6 zeigt ein Beispiel für eine Abdeckung für einen Doppeltaster in einem Schalterprogramm der Elektroinstallation.

Es handelt sich bei dieser Abdeckung um eine Doppelwippe. Die beiden Wippen können als Taster ausgeführt sein oder als Schalter. Dabei führt das Schließen eines der Schalter oder Taster dazu, dass der andere Schalter oder Taster automatisch geöffnet wird, soweit dieser andere Schalter oder Taster zuvor geschlossen war. Diese Abdeckung weist einen äußeren Rand 601 auf. Es ist zu sehen, dass auf der Abdeckung auf jeder der beiden Wippen ein Symbol 602, 603 angebracht ist, das einen Taster repräsentiert. Die Symbole 602, 603 repräsentieren dabei auch die Bewegungsrichtung, in die eine Jalousie oder ein Rollladen bei Betätigung der entsprechenden Wippe bewegt wird-.

Das Material dieser Abdeckung kann so beschaffen sein, dass zumindest die Oberseite der Abdeckung vollständig fluoreszierende oder phosphoreszierende Eigenschaften aufweist.

Es ist auch möglich, dass diese Abdeckung erste Bereiche aufweist, in denen die Abdeckung von der Oberseite bis zur Unterseite aus dem üblichen Kunststoff besteht. Diese Abdeckung weist weitere Bereiche auf, in denen die Abdeckung zumindest auf der Oberseite fluoreszierende oder phosphoreszierende Eigenschaften aufweist. Diese weiteren Bereiche können sein:
> Der Randbereich 601 der Abdeckung, ggf. auch mit einer senkrechten Linie in der Mitte, in der die beiden Wippen aneinanderstoßen,
> Jeweils die Mitte der beiden Wippen, wobei dieser weitere Bereich besonders vorteilhaft die Struktur eines Symbols 602 und 603 aufweist.

Mit den Abdeckungen gemäß den Figuren 4 bis 6 lässt sich auch ein Bestandteil eines Baukastensystems für ein Schalterprogramm umsetzen.

Vorteilhaft sind dabei die Abdeckungen für Steckdosen unterschiedlich zu den Abdeckungen für Schalter oder Taster.

Dies lässt sich realisieren, indem nicht die vollständige Oberfläche der Abdeckung aus fluoreszierendem oder phosphoreszierendem Material besteht. Die weiteren Bereiche können dann bei der Abdeckung für Steckdosen beispielsweise die Umgebung der kreisförmigen Ausnehmung 302 oder die Umgebung der Öffnungen 303 und 304 sein. Bei den Schaltern und Tastern können diese weiteren Bereiche der Abdeckung dann anders angeordnet sein. Vorteilhaft sind dabei auch die weiteren Bereiche der Abdeckungen der Schalter unterschiedlich zu den weiteren Bereichen der Abdeckungen für Taster.

Figur 7 zeigt ein Bauteil einer elektrischen Steckverbindung, das ein Stecker 701 ist.

Dieser Stecker 701 weist zwei Pins 702 und 703 auf sowie einen Griffbereich 708. Die Spitzen 704 und 705 dieser Pins 702 und 703 bestehen aus Metall und sind durch den Stecker durchkontaktiert. Die Bereiche 706 und 707 dieser Pins 702 und 703 bestehen aus Kunststoff.

Diese Bereiche 706 und 707 können zumindest an der Oberfläche aus einem Material mit den fluoreszierenden und/oder phosphoreszierenden Eigenschaften bestehen. Alternativ oder zusätzlich kann auch der Griffbereich in seiner Oberfläche bzw. In einem Teilbereich der Oberfläche des Griffbereichs aus einem Material mit den fluoreszierenden und/oder phosphoreszierenden Eigenschaften bestehen.

Der Stecker 701 kann beispielsweise ein SchuKo-Stecker sein oder ein Euro-Stecker.

## Patentansprüche

1. Bauteil einer elektrischen Steckverbindung mit einem Einsteckschacht,
wobei sich im Inneren des Einsteckschachtes ein Kunststoffelement (2, 202) befindet,
**dadurch gekennzeichnet,**
**dass** zumindest Flächenteile des Kunststoffelementes (2, 202), die in dem Einsteckschacht vor dem Kontaktieren der Steckverbindung sichtbar sind, aus einem Material mit fluoreszierenden oder phosphoreszierenden Eigenschaften bestehen.

2. Bauteil einer elektrischen Steckverbindung mit einem oder mehreren Pins (702, 703),
wobei die Pins (702, 703) insofern ein Kunststoffelement aufweisen, als die Pins (702, 703) an der Oberfläche teilweise (706, 707) aus Kunststoff bestehen, **dadurch gekennzeichnet,**
**dass** zumindest Flächenteile des Kunststoffelementes (706, 707) und/oder Flächenteile des Griffbereichs (708) des Bauteils (701) aus einem Material mit fluoreszierenden oder phosphoreszierenden Eigenschaften bestehen.

3. Abdeckung (301, 401, 501, 601) und/oder Rahmen für eine Steckdose, einen Taster, einen Schalter oder ein elektrotechnisches oder elektronisches Bauelement,
**dadurch gekennzeichnet,**
**dass** die Abdeckung (301, 401, 501, 601) und/oder der Rahmen zumindest teilweise aus einem Material mit fluoreszierenden oder phosphoreszierenden Eigenschaften besteht.

4. Bauteil oder Abdeckung nach einem der Ansprüche 1 bis 3,
**dadurch gekennzeichnet,**
**dass**
> das Kunststoffelement (2, 202; 706, 707) des Bauteils der elektrischen Steckverbindung
und/oder
> die Abdeckung (301, 401, 501, 601)
zumindest teilweise aus einem Materialgemisch besteht,
> wobei das Materialgemisch als einen ersten Bestandteil Kunststoff aufweist und
> wobei das Materialgemisch als einen weiteren Bestandteil ein Material mit fluoreszierenden oder phosphoreszierenden Eigenschaften aufweist.

5. Abdeckung nach einem der Ansprüche 3 oder 4,
**dadurch gekennzeichnet,**
**dass** die Abdeckung (301; 401; 501; 601)
> in ersten Bereichen der Abdeckung (301, 302, 401, 501, 601) in der Oberfläche und in der Tiefe durchgehend aus Kunststoff besteht
und
> in übrigen Bereichen der Oberfläche (302, 303, 304; 402; 502; 602, 603) zumindest teilweise aus einem Material mit fluoreszierenden oder phosphoreszierenden Eigenschaften.

6. Abdeckung nach Anspruch 5,
wobei die Abdeckung eine Abdeckung (301) für eine Steckdose ist, **dadurch gekennzeichnet,**
**dass** die übrigen Bereiche der Oberfläche der Abdeckung
> ein Bereich um die runde Ausnehmung (302) in der Abdeckung der Steckdose sind zur Aufnahme eines runden Steckers
und/oder
> ein Bereich um die beiden Öffnungen (303, 304) in der Abdeckung (301) der Steckdose zum Durchstecken der Kontakte eines Steckers, um diese in der Steckdose zu kontaktieren,
und/oder
> der Randbereich der Abdeckung (301) der Steckdose sind.

7. Abdeckung nach Anspruch 5 oder 6,
wobei die Abdeckung eine Abdeckung (401; 501; 601) für einen Schalter, einen Taster oder ein elektrotechnisches oder elektronisches Bauelement ist, **dadurch gekennzeichnet,**
**dass** die übrigen Bereiche der Oberfläche der Abdeckung (401; 501; 601)
> die Umgebung der äußeren Begrenzung der Bedienfläche des Schalters oder Tasters in der Abdeckung (401; 501; 601)
und/oder
> der Randbereich der Abdeckung (401; 501; 601) des Schalters oder Tasters
und/oder
> die Mitte der Abdeckung (401; 501; 601) des Schalters oder Tasters sind.

8. Baukastensystem, umfassend mehrere Typen von Abdeckungen nach einem der Ansprüche 5 bis 7,
> wobei das Baukastensystem einen ersten Typ von Abdeckungen (301) für Steckdosen umfasst,
> wobei das Baukastensystem zumindest einen zweiten Typ (401, 501, 601) von Abdeckungen für Schalter und/oder Taster umfasst,
**dadurch gekennzeichnet,**
**dass** die Anordnung der übrigen Bereiche der Oberfläche der Abdeckungen (301; 401; 501; 601) in dem Baukastensystem unterschiedlich ist
> für den ersten Typ von Abdeckungen (301)
> zu dem zumindest einen zweiten Typ von Abdeckungen (401; 501; 601).
